# EUROPEAN PATENT APPLICATION

(11) **EP 4 357 734 A1**
(43) Date of publication of application: **24.04.2024**
(21) Application number: 23203750.7
(22) Date of filing: 16.10.2023
(51) Int. Cl.: G01C 21/36, G06F 16/29

(54) **METHOD, IMAGE PROCESSING APPARATUS, AND SYSTEM FOR GENERATING ROAD IMAGE BY USING TWO-DIMENSIONAL MAP DATA**

(30) Priority: 19.10.2022 KR 20220135254; 26.09.2023 KR 20230128742
(71) Applicant: Electronics and Telecommunications Research Institute, Daejeon 34129 (KR)
(72) Inventor: JOO, Inhak, 34129 Daejeon (KR); JANG, In Sung, 34129 Daejeon (KR)
(74) Representative: Betten & Resch

(57) **Abstract**

A method, an image processing apparatus, and a system for generating a road image by using two-dimensional map data are proposed. The method includes receiving, by an image processing apparatus, an input of the map data of a specific area, extracting, by the image processing apparatus, road geometry information and road attribute information of a road from the map data, determining, by the image processing apparatus, road object standard information matched with the road attribute information for at least one road element of the road, generating, by the image processing device, style information for the at least one road element on a basis of at least one of the road attribute information and the road object standard information, and applying, by the image processing apparatus, the style information to the road geometry information to generate a basic road image including the road and the at least one road element.

## Description

### CROSS REFERENCE TO RELATED APPLICATION

This application claims priority to Korean Patent Application No. 10-2022-0135254, filed 19 October 2022, and Korean Patent Application No. 10-2023-0128742, filed 26 September 2023, the entire contents of which are incorporated herein for all purposes by this reference.

### BACKGROUND

### Field

The following description relates to a technique for generating an image of a real road from two-dimensional vector road map data.

### Description of the Related Art

As visualization technology for displaying three-dimensional data on a screen develops, three-dimensional graphic-based city information services such as VWorld are being provided. Technology for generating high-quality three-dimensional models from aerial photographs, or images obtained from drones, mobile devices, etc. has been developed. However, creating and managing three-dimensional data requires significant cost and time. Accordingly, the creating of the three-dimensional data is being performed mainly on buildings that occupy the largest area in urban areas.

In the urban areas, roads occupy the second largest area after buildings. However, as for the roads, there is very little three-dimensional data created, and also little technology has been developed to create three-dimensional models. A three-dimensional city information system simply outputs and uses image data as is, which is captured as aerial photographs of road sections. The three-dimensional city information system arranges building objects created in three dimensions on a real image such as an aerial photograph. Accordingly, in the three-dimensional city information system, in a case where road images are zoomed in, there is a problem that the road images look pixelated, unlike the case of buildings. In addition, road photographs may also include noise such as cars, pedestrians, street trees, shadows, and the like depending on the time of photographing.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, there is provided a method for generating a road image by using map data, the method including: receiving, by an image processing apparatus, an input of the map data of a specific area; extracting, by the image processing apparatus, road geometry information and road attribute information of a road from the map data; determining, by the image processing apparatus, road object standard information matched with the road attribute information for at least one or more road elements of the road; generating, by the image processing device, style information for the at least one or more road elements on a basis of at least one of the road attribute information and the road object standard information; and applying, by the image processing apparatus, the style information to the road geometry information to generate a basic road image comprising the road and the at least one or more road elements.

In another aspect, there is provided an image processing apparatus for generating a road image, the apparatus including: an interface device for receiving an input of map data of a specific area; and a calculation device for extracting road geometry information and road attribute information of a road from the map data; determining road object standard information matched with the road attribute information for at least one or more road elements of the road; generating style information for the at least one or more road elements on a basis of at least one of the road attribute information and the road object standard information; and applying the style information to the road geometry information to generate a basic road image comprising the road and the at least one or more road elements.

In yet another aspect, there is provided a system for generating a road image, the system including: a map server for storing map data; a regulation server for storing standard information on road elements according to road regulations; and an image processing apparatus configured to perform (i) receiving the map data of a specific area from the map server; (ii) extracting road geometry information and road attribute information of a road from the map data; (iii) receiving, from a regulation database, road object standard information matched with the road attribute information for the at least one or more road elements of the road; (iv) generating style information for the at least one or more road elements on a basis of at least one of the road attribute information and the road object standard information; and (v) applying the style information to the road geometry information to generate a basic road image comprising the road and the at least one or more road elements.

### BRIEF DESCRIPTION OF THE DRAWINGS

FIG. 1 is view illustrating an example of a process of generating a road image from two-dimensional road map data.
FIGS. 2A to 2D are views illustrating examples of road elements included in the road image.
FIG. 3 is a view illustrating an example of an intersection area generated by applying style information.
FIGS. 4A to 4C are views illustrating an example of a process of overlaying an aerial photograph with a generated road image.
FIG. 5 is a view illustrating an example of a map image divided into tile units.
FIGS. 6A to 6B are views illustrating examples of road images provided according to respective scales.
FIG. 7 is a view illustrating another example of a process of generating a road image by an image processing apparatus.
FIG. 8 is a view illustrating an example of the image processing apparatus for generating a road image.
FIG. 9 is a view illustrating an example of a spatial information system using road images.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

In the technology described below, various modifications may be made and various exemplary embodiments may be provided, so particular exemplary embodiments will be illustrated in the drawings and described in detail. However, this is not intended to limit the technology described below to a particular embodiment form. On the contrary, the present disclosure is to be understood to include all various alternatives, equivalents, and substitutes that may be included within the spirit and technical scope of the technology described below.

Terms such as first, second, A, B, etc. may be used to describe various components, but the corresponding components are not limited by the terms, and are used only for the purpose of distinguishing merely one component from another component. For example, without departing from the scope of the technology described below, a first component may be referred to as a second component, and similarly, the second component may be referred to as the first component. The term "and/or" includes a combination of a plurality of related and described items or any of the plurality of related and described items.

In the terms used in the present specification, singular expressions should be understood to include plural expressions unless the context clearly interprets otherwise. It should be understood that the terms such as "includes", "comprises", and the like mean that the described feature, number, step, operation, component, part, or combination thereof exists, but do not preclude possibilities of the presence or addition of one or more other features, numbers, steps, operations, components, parts, or combinations thereof.

Prior to a detailed description of the drawings, it should be clarified that the classification of components in the present specification is merely a classification for each main function of each corresponding component. That is, it may be provided such that two or more components described below may be combined into one component, or one component may be divided into two or more components for each more subdivided function. Further, in addition to its corresponding main function, each component to be described below may additionally perform some or all of the functions of other components, and naturally, a part of the corresponding main function of each component may also be exclusively performed by other designated components.

In addition, in performing a method or method of operation, each process constituting the method may be performed in a different order from a specified order unless a specific order is clearly described in context. That is, each process may be performed in the same order as specified, may be performed substantially simultaneously, or may be performed in a reverse order.

First, terms used in the following description are defined.

"Road map data" refers to data including road geometry information as well as attribute information such as road names, the number of lanes, and types of road markings.

"Road geometry information" is information that defines a layout or a shape of a road on a two-dimensional map, and is composed of points, lines, or polygons, which have two-dimensional geographic coordinates.

"Road attribute information" is information stored in attribute fields in road map data. For example, the road attribute information may include information on road materials such as asphalt, cement, and unpaved road materials, and information on the number of lanes on each road, a width of each lane, lane types, presence or absence of median strips, median strip types, presence or absence of crosswalks, crosswalk types, presence or absence of traffic lights, traffic light types, road sign types, road marking types, etc.

"Road elements" refer to various types of elements constituting a road. The road elements may include lanes, center lines, crosswalks, stop lines, other road markings, etc.

"Road object standard information" is information indicating shapes or colors of road elements. The road object standard information is information that defines a width of each road, a width of each lane, a color of each lane, a size and color of each crosswalk, and sizes and colors of other road markings. For example, other road markings may include markings of bus-only roads, no left turns, speed limits, guide lines, directions of travel, child protection areas, etc. The road object standard information may vary depending on countries, regions, or administrative districts in which roads are located. The road object standard information may be defined according to road regulations.

"Road regulations" refer to legal regulations, administrative guidelines, and the like for real roads. The road regulations may include regulations on sizes and colors of road elements announced by national agencies such as the Ministry of Land, Infrastructure and Transport, the Korean National Police Agency, and the Road Traffic Authority. For example, the road regulations may include standards for widths and spacings of lanes (i.e., dotted and solid lines), horizontal and vertical sizes of speed limit letters, the chromaticity coordinates of road sign colors (i.e., yellow, blue, red, etc.), spacings and angles of guide line arrows, etc.

"Style information" refers to information required when a road is graphically output. The style information may include information about a thickness and color of each line, whether a dotted or solid line, a color of a polygon, texture, border color, and the like. Road elements may be expressed by style information different from each other. The style information may be identified with a specific code value in a case where each road element has a predetermined shape or specification. The style information may also include information about road elements to be output according to a user's zoom-in request.

"Road image" refers to a road image output as two-dimensional graphics. Hereinafter, the road image refers to an image of a road area generated from two-dimensional map data. The road image may refer to an image generated by overlaying a road graphic image on an actual image such as an aerial photograph.

"Image processing apparatus" refers to a device for generating a road image from road map data. The image processing apparatus refers to a computing device capable of processing image data and generating images. The image processing apparatus may be implemented in various forms. For example, the image processing apparatus may be implemented as a PC, a server on a network, a smart device, a chipset having a dedicated program embedded therein, or the like. Further, the image processing apparatus may also be some components of a spatial information system.

The image processing apparatus may generate the entire road image for a corresponding area on the basis of map data for a certain administrative district. However, in the following description, an area where a road image is generated will be described without specifying the area.

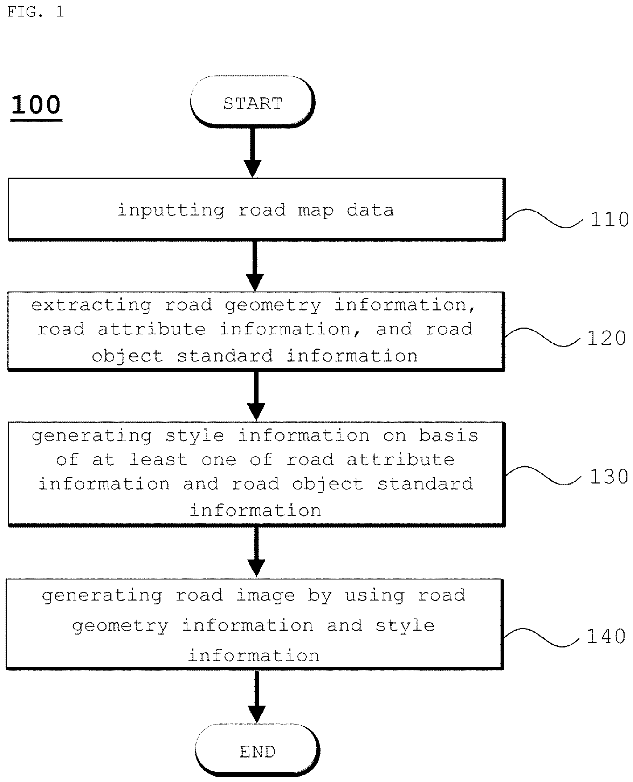

FIG. 1 is view illustrating an example of a process 100 of generating a road image from two-dimensional road map data.

In step 110, an image processing apparatus receives an input of road map data for a predetermined area. In this case, the road map data may be two-dimensional vector data. The road map data includes road information for the corresponding area. The image processing apparatus may receive map data from a map server. For example, the road map data may be any one of data such as a high-definition road map from the National Geographic Information Institute, a road ledger from the Ministry of Land, Infrastructure and Transport, and public data such as T-GIS from Seoul Metropolitan Government in South Korea.

In step 120, the image processing apparatus may extract road geometry information and road attribute information from the road map data. The road geometry information may be composed of coordinate values of points, lines, or polygons for outputting road elements on a two-dimensional screen. The road attribute information may include road materials, the number of road lanes, lane types, presence or absence of median strips, presence or absence of crosswalks, presence or absence of traffic lights, and presence or absence of other road elements. The image processing apparatus may extract the road attribute information from attribute fields in the road map data. For example, the image processing apparatus may extract the road attribute information by reading columns of records in a DBF file including attribute information of the road map data. Meanwhile, column values of a database expressing the road attribute information may differ depending on types of road map data. It is assumed that the image processing apparatus knows column information corresponding to specific road attribute information in advance depending on the types of road map data.

In addition, in step 120, the image processing apparatus may extract road object standard information. For example, the image processing apparatus may extract the road object standard information from a road regulation database.

In step 130, the image processing apparatus may generate style information on the basis of at least one of the road attribute information and road object standard information.

The image processing apparatus may determine the style information for each road element by using the road object standard information about road attributes (i.e., types, the number of lanes, etc.) of each road element included in the road attribute information.

Several examples of generating style information will be described. (i) The image processing apparatus may determine the style information (i.e., a shape or pattern of each lane, a thickness of each lane, a distance between lanes, and a color of each lane) of each road on the basis of the number of lanes in the road attribute information and the road object standard information for a type of each corresponding lane. For example, in a case where a road is expressed merely as a center line, the image processing apparatus may determine a width of the road to be output in a shape of polygon on the basis of total number of lanes or number of lanes per direction, which belongs to the road attribute information, and the road object standard information for each corresponding lane. The image processing apparatus may determine a width of the entire road by multiplying a width per lane defined in road regulations by the number of lanes. In addition, the image processing apparatus may determine a pattern such as a solid line or a dotted line according to lane types of the road geometry information. (ii) The image processing apparatus may determine a color or texture of a relevant road polygon on the basis of road materials of the road attribute information. For example, in a case where a road material has an attribute of paved asphalt or an unpaved road material, the image processing apparatus may output a polygon of a paved road in a first color and a polygon of an unpaved road in a second color. The image processing apparatus may also express texture of each corresponding material according to the attribute of the paved road or unpaved road. (iii) The image processing apparatus may determine style information of a corresponding road element on the basis of presence or absence of the road element (i.e., the location) in the road attribute information and the road object standard information for the corresponding road element. For example, as for a crosswalk, the image processing apparatus may determine a shape or pattern of the crosswalk, a line thickness of the crosswalk, a color of the crosswalk, and a size of the crosswalk. As for a stop line, the image processing apparatus may determine a location of the stop line, a thickness of the stop line, a pattern of the stop line, a length of the stop line, and a color of the stop line. (iv) The image processing apparatus may determine style information about icons for road elements such as traffic lights and road signs, which are arranged on a road. For example, the image processing apparatus may determine style information including an identifier of an image-shaped icon according to the type of traffic light (i.e., a three-color light, a four-color light, a pedestrian light, etc.). Alternatively, the image processing apparatus may determine style information including an identifier of an image-shaped icon in a shape (e.g., a triangle, circle, square, etc.) and a color, which are specified in the regulations according to the types of road signs (i.e., no traffic, speed limits, one-way street, etc.).

In step 140, the image processing apparatus may generate a road image by using the road geometry information and style information. The road geometry information may be defined as coordinate values of points, lines, or polygons that constitute a road. That is, the road geometry information may define shapes and locations of the entire road in a specific area. The image processing apparatus may identify geometry information of the road in the specific area by using the road geometry information and apply the style information to the corresponding road geometry information, so as to generate a graphic road image.

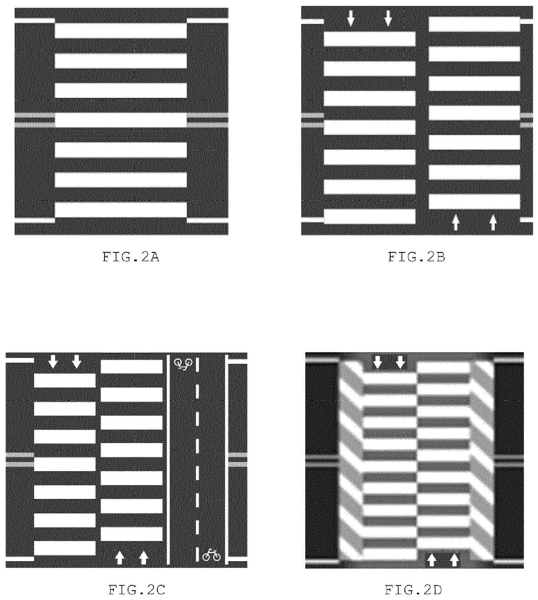

FIGS. 2A to 2D are views illustrating examples of road elements included in a road image. FIGS. 2A to 2D show examples of crosswalks among the road elements. Road attribute information for crosswalks includes crosswalk types. The image processing apparatus may determine style information of a crosswalk object located on a corresponding road according to specifications (i.e., a shape, color, etc.) based on the crosswalk types of the road attribute information and the corresponding crosswalk types of the road object standard information. FIGS. 2A to 2D show the examples of the crosswalk types. For example, the crosswalk types include a crosswalk without dividing traffic direction in FIG. 2A, a two-stage crosswalk in FIG. 2B, a bicycle crosswalk in FIG. 2C, a plateau-style crosswalk in FIG. 2D, etc.

The image processing apparatus may determine a color, horizontal and vertical sizes, and a spacing of a crosswalk zebra pattern according to the road object standard information. For example, the image processing apparatus may determine style information of the zebra pattern such as a color (i.e., white or yellow), horizontal and vertical sizes (in cm) of each white part, a spacing (in cm) between each white part, and an angle of each yellow diagonal line. In this case, as described above, the road object standard information is in accordance with road regulations for relevant country or region.

The image processing apparatus generates a road image by applying the style information determined for a corresponding road to geometry information thereof. The image processing apparatus renders a road map by applying the style information. Rendering the road map is a process of displaying the road on a two-dimensional blank screen by using the geometry information (i.e. the two-dimensional coordinate information) included in each of road elements. In a sense, the rendering includes not only a process of outputting an image on a screen, but also a process of outputting the image to a memory or a file that is not visible on the screen. The image processing apparatus stores, as a physical file, a rendered image on the screen or memory in a computer. An unrendered part (i.e., areas other than a road area) of the corresponding file may have a transparent state.

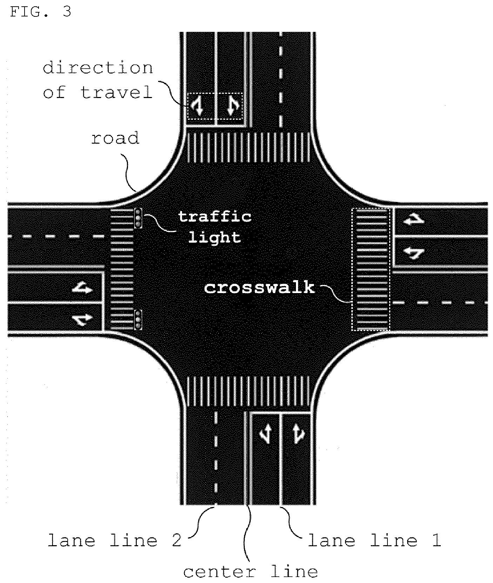

FIG. 3 shows an example of a road image rendered by the image processing apparatus. FIG. 3 is a view illustrating the example of an intersection area generated by applying style information. The image processing apparatus may determine locations of roads around the intersection from two-dimensional coordinates of road geometry information extracted from map data. Furthermore, the image processing apparatus may visualize each road element on the basis of attribute information of each road element located on the corresponding roads and the road object standard information.

According to road geometry information indicating locations and directions of crosswalks on an intersection road and style information indicating types of the crosswalks, the image processing apparatus may arrange one-way crosswalks each having a predetermined size and color. The image processing apparatus may arrange travel direction markings indicating possible directions of travel for a vehicle on the intersection road according to the road geometry information about the travel direction markings on the intersection road and style information indicating the types of travel direction markings. The image processing apparatus may visualize a lane according to the road geometry information indicating the length and direction of lane and the style information indicating the type of lane. The image processing apparatus may arrange a two-line center line, a solid line (i.e., lane line 1), and a dotted line (i.e., lane line 2) on a road. Among road elements, a thickness of each lane, a spacing between lanes, and the like are determined according to the road object standard information. The image processing apparatus may determine a thickness, length, and size of each road element according to the road object standard information on the basis of a size of the real road.

Furthermore, among the road elements, the image processing apparatus may output objects such as traffic lights and road signs, which are arranged on a road, in the form of separate icons. The image processing apparatus may determine locations of the traffic lights according to the road geometry information and arrange the traffic light icons on a road image according to the style information indicating the types of traffic lights.

Meanwhile, the image processing apparatus may also display sizes of the road elements, so as to be reduced or zoomed-in at the same proportion according to a size of the road being rendered.

The image processing apparatus may generate a new road image by overlaying the generated road image with another image. The new road image may be named as a overlaid road image. In addition, another image used for synthesis may be an aerial photograph, a satellite photograph, a three-dimensional modeled object image, a two-dimensional object image, a virtual object images, etc. For example, the image processing apparatus may generate the overlaid road image by overlaying the road image, which is generated from road map data, with the aerial photograph.

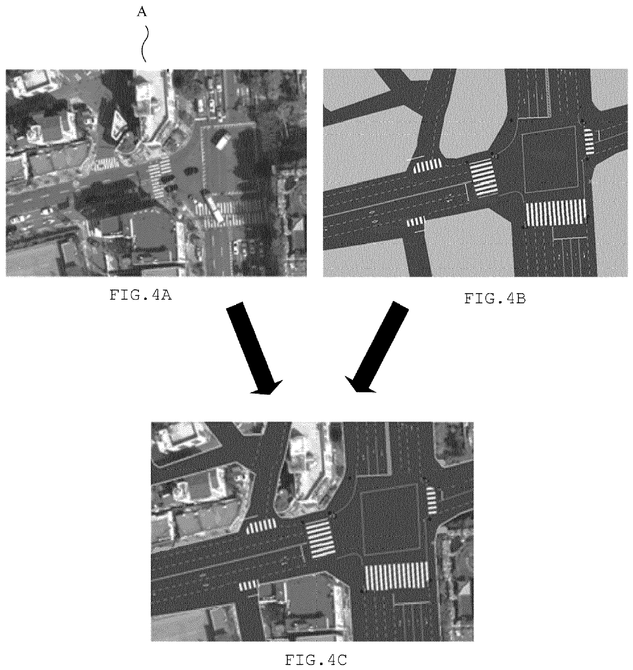

FIGS. 4A to 4C show an example of a process of overlaying a generated road image on an aerial photograph. FIG. 4A is a view illustrating an example of the aerial photograph of area A. FIG. 4B is a view illustrating an example of the road image generated from map data of area A. In the road image in FIG. 4B, a remaining area excluding a road area is in a state of blank or transparent. The process of generating the road image is as described in FIG. 1. FIG. 4C is a view illustrating a overlaid road image generated by overlaying the road image (in FIG. 4B) on the aerial photograph (in FIG. 4A). During the overlay process, the image processing apparatus may adjust and match respective positions of the aerial photograph and the road image so as to represent the same area, and may perform scale adjustment and/or parallel movement according to coordinate systems and scales of the two data.

A three-dimensional city information system provides city information in a three-dimensional space of a real world. The above-described road image may be used in the three-dimensional city information system. The three-dimensional city information system assumes that height information (i.e. three-dimensional topographic information) of the ground is known in a specific area. The image processing apparatus may express the road image in a three-dimensional space by matching the generated two-dimensional road image to the corresponding space and performing texture mapping on a three-dimensional terrain.

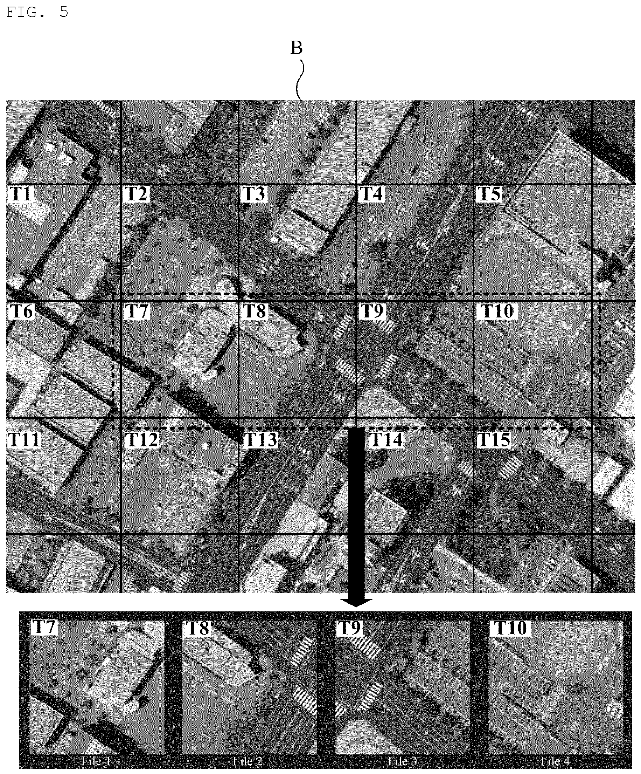

The image processing apparatus generates a map image for a specific area through the above-described process. In general, map data includes country-level information or information about the entire world. That is, the map data includes information about a very large area. The image processing apparatus may divide the map image for the specific area into tile units. In this case, a client terminal requesting spatial information inputs or receives the map image in tile units on the basis of a requested location in the specific area. The image processing apparatus may divide the map image into a plurality of tiles, and store each tile by matching an arranged position of each tile with an identifier of each corresponding tile. FIG. 5 is a view illustrating an example of a map image divided into the tile units. FIG. 5 shows the map image for area B. The map image in FIG. 5 is a overlaid road image generated by overlaying a graphically rendered road image on an aerial photograph. The overlaid road image in FIG. 5 is divided into a plurality of tiles. Identifiers T1 to T15 of some tiles are indicated on the overlaid road image in FIG. 5. The image processing apparatus may store, as separate files, the tiles of the overlaid road image. The bottom of FIG. 5 shows an example in which some tiles T7 to T10 are stored as respective individual file names File 1 to File 4.

Road images may be used in three-dimensional spatial information services, etc. The operation of a three-dimensional city information system is described as an example. A client terminal for receiving provided spatial information requests a road image at a predetermined scale for an area of interest for which service is desired from the three-dimensional city information system. Along with a desired scale, the client terminal may request information (i.e., a location or coordinates) of the area of interest for which service is desired from the three-dimensional city information system. Furthermore, the client terminal may also request zoom-in or zoom-out of the currently provided road image.

Meanwhile, a road image may not require road elements to be precisely expressed depending on scales. Accordingly, the image processing apparatus may not render the entire road image or some road elements in the road image in accordance with a scale value. In this case, the image processing apparatus may be either a server or a client terminal of the three-dimensional city information system.

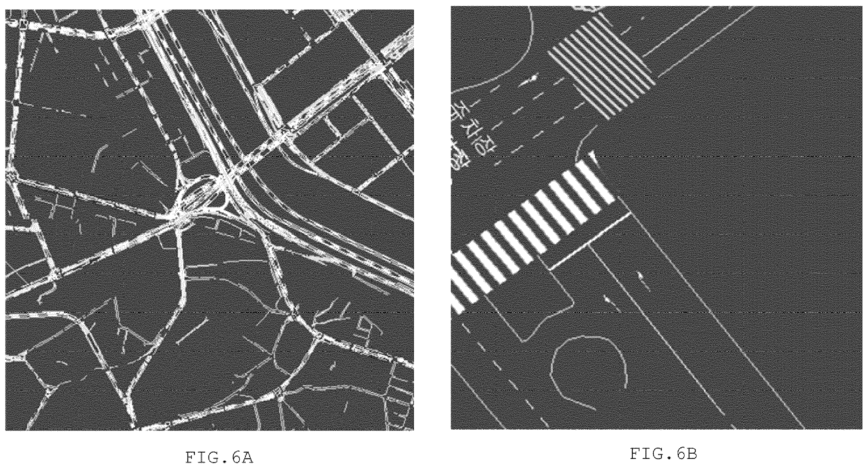

FIGS. 6A and 6B show examples of road images provided according to respective scales. In FIG. 6A, since a scale ratio is low, road elements of a road are not expressed precisely. FIG. 6B shows an example where a scale ratio is higher than that of FIG. 6A. In FIG. 6B, road elements such as crosswalks and travel direction signs are precisely expressed.

The image processing apparatus may not render all road elements or at least some of the road elements depending on scales or zoom levels of a road image. For convenience of description, it is assumed that there is provided a relationship where a first threshold < a second threshold. For example, (i) in Case 1, the image processing apparatus may render merely some elements of road element types when a scale is smaller than a first threshold (i.e., a requested scale < the first threshold). In this case, the image processing apparatus may merely render a large or important road element among the road elements. That is, the image processing apparatus may not render a road element that is small in size or has relatively low importance. (ii) The image processing apparatus may further render at least some of the road elements that are not rendered in Case 1 among the road element types when a scale is greater than or equal to the first threshold and lower than the second threshold (i.e., the first threshold ≤ a requested scale < the second threshold). (iii) The image processing apparatus may render all the road elements when a scale is greater than or equal to the second threshold (i.e., the second threshold ≤ the requested scale).

That is, the image processing apparatus may set style information of each road element differently depending on scale levels. This means that the image processing apparatus sets expression precision for target road elements differently.
(1) Describing a center line as an example, when a scale is greater than or equal to a second threshold, the image processing apparatus may generate style information (i.e., a two-line yellow center line) including a shape (e.g., two lines) and a color (e.g., yellow) of a real center line. In addition, when a scale is greater than or equal to a first threshold and less than the second threshold, the image processing apparatus may generate style information (i.e., a single yellow solid line) in which a shape of a center line is a simple solid line and a color includes an actual yellow color. Furthermore, when a scale is less than the first threshold, the image processing apparatus may generate style information (i.e., a single white solid line) in which a shape of a center line is a simple solid line and a color includes white color.
(2) Describing a crosswalk as an example, when a scale is greater than or equal to a second threshold, the image processing apparatus may generate style information (i.e., a yellow + white plateau-style crosswalk) including a shape (e.g., a plateau crosswalk) and colors (i.e., yellow + white) of a real crosswalk. In addition, when a scale is greater than or equal to a first threshold and less than the second threshold, the image processing apparatus may generate style information (i.e., a white two-stage crosswalk) including a shape (e.g., a two-stage crosswalk) and a color (i.e., white) of the crosswalk. Furthermore, when a scale is less than the first threshold, the image processing apparatus may generate style information (i.e., a white crosswalk) including white color and a shape of the crosswalk is a simple one-stage crosswalk.

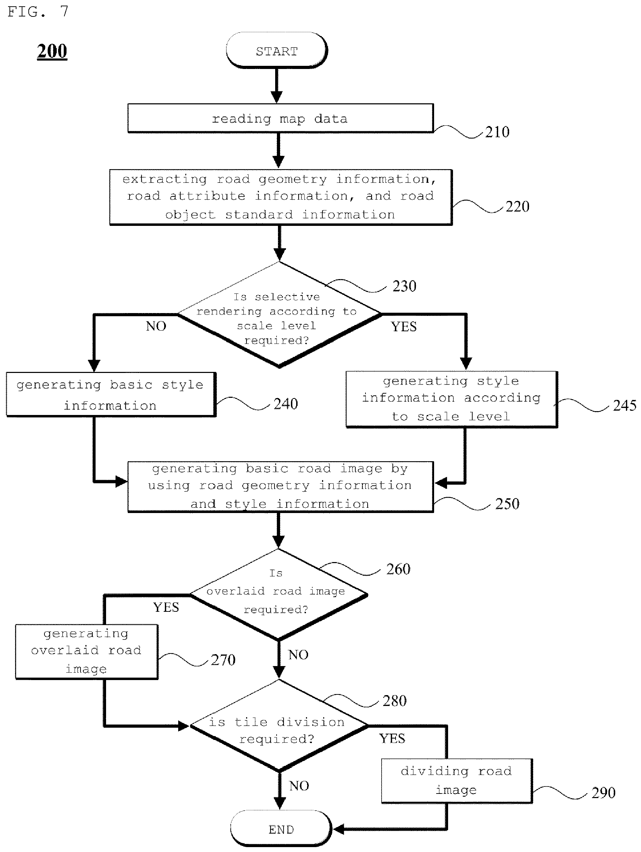

FIG. 7 is a view illustrating another example of a process 200 of generating a road image by an image processing apparatus.

In step 210, the image processing apparatus reads road map data for a predetermined area. In this case, the road map data may be two-dimensional vector data. The road map data represents information on points, lines, or polygons about roads in the corresponding area.

In step 220, the image processing apparatus may extract road geometry information and road attribute information from the road map data. In addition, in step 220, the image processing apparatus may extract road object standard information. The image processing apparatus may determine specific road object standard information matched with the road attribute information.

In step 230, the image processing apparatus determines whether selective rendering of a currently generated map image is required or not according to a scale level of a map.

Fundamentally, the image processing apparatus may generate style information on the basis of at least one of the road attribute information and the road object standard information. The image processing apparatus may determine style information for each of the road elements by using the road object standard information about road attributes (i.e., types, the number of lanes, etc.) of each of the road elements included in the road attribute information.

When a requested scale level is less than a threshold, the image processing apparatus may determine that selective rendering is required. In step 240, when the selective rendering is not required (i.e., NO in step 230), the image processing apparatus generates basic style information for generating a realistic road image for all the road elements. In step 245, when the selective rendering is required (i.e., YES in step 230), the image processing apparatus generates style information different from the basic style information for some road elements among all the road elements according to a scale level. An example of generating the style information for the selective rendering is as described in FIG. 6.

In step 250, the image processing apparatus generates a basic road image by using the road geometry information and style information. The image processing apparatus may identify geometry information of a road and road elements thereof in a specific area by using the road geometry information, and may apply the style information to the corresponding geometry information, so as to generate a graphic road image.

In step 260, the image processing apparatus determines whether generating a overlaid road image is required or not.

In step 270, in a case where the generating of the overlaid road image is required (i.e., YES in step 260), the image processing apparatus generates the overlaid road image. The image processing apparatus may generate the overlaid road image by overlaying a basic road image on an aerial photograph.

When the generating of the overlaid road image is not required (i.e., NO in step 260), the image processing apparatus uses the basic road image for subsequent work.

In step 280, the image processing apparatus may determine whether the currently generated basic road image or overlaid road image should be divided into tile units or not. In step 290, in a case where tile division is required (i.e., YES in step 280), the image processing apparatus divides the entire road image into a plurality of tiles.

Thereafter, the image processing apparatus may also generate three-dimensional road data by texture mapping the basic road image or overlaid road image to a terrain having heights or curvatures.

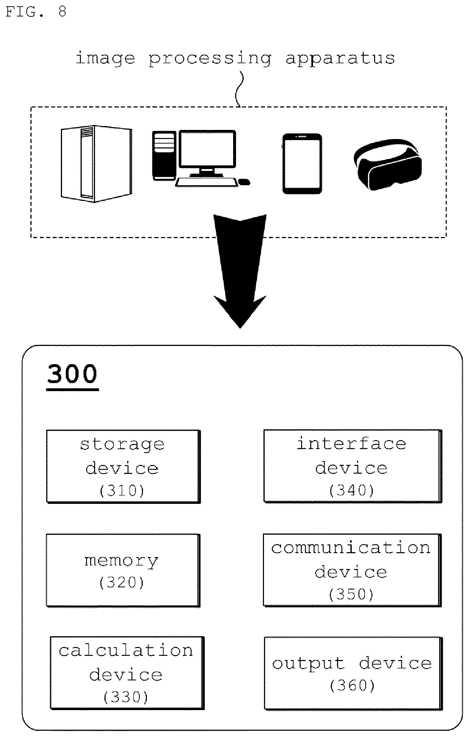

FIG. 8 is a view illustrating an example of an image processing apparatus 300 for generating a road image. The image processing apparatus 300 is a device for generating the road image according to the process of FIG. 1 or FIG. 7. The image processing apparatus 300 may be implemented in any one of various forms such as a smart device, a PC, a server on a network, a video playback device, a head-mounted device, etc.

The image processing apparatus 300 may include a storage device 310, a memory 320, a calculation device 330, an interface device 340, a communication device 350, and an output device 360.

The storage device 310 may store map data.

The storage device 310 may store road geometry information and road attribute information, which are extracted from the map data.

The storage device 310 may store road object standard information.

The storage device 310 may store style information, which is generated on the basis of at least one of the road attribute information and the road object standard information.

The storage device 310 may store source code or programs that control data preprocessing and road image generation processes.

The memory 320 may store data generated in a process of the image processing apparatus 300 generating a road image.

The interface device 340 is a device for receiving predetermined information or data. The interface device 340 may refer to a user input device and a device for transmitting data from the input device into the image processing apparatus. Furthermore, the interface device 340 may refer to a device for receiving the predetermined data transmitted from an external device or storage medium.

The interface device 340 may receive an input of map data from an external object.

The interface device 340 may receive an input of road object standard information from the external object.

The interface device 340 may receive an input of a scale level for a road image.

The interface device 340 may also transmit generated style information to the external object.

The interface device 340 may also transmit the generated road image to the external object.

The communication device 350 refers to a component for receiving and transmitting predetermined information through a wired or wireless network. The communication device 350 may transmit and receive data with external devices such as other electronic devices or servers by using wired or wireless communication technology.

The communication device 350 may receive map data from an external object.

The communication device 350 may receive road object standard information from the external object.

The communication device 350 may receive a scale level for a road image.

The communication device 350 may also transmit generated style information to the external object.

The communication device 350 may also transmit the generated road image to the external object.

Meanwhile, the interface device 340 may also refer to a component for transmitting information or data received through the communication device 350 into the image processing apparatus 300.

The calculation device 330 may request, search, receive, or utilize data in the memory 320.

The calculation device 330 may perform a road image generation operation by controlling the components of the image processing apparatus. The calculation device 330 may perform the road image generation process described in FIG. 1 or FIG. 7.

In a case where connection with an external device is required, the calculation device 330 may control to generate a control signal for controlling the corresponding external device and to transmit the generated control signal to the corresponding external device.

The calculation device 330 may extract road geometry information and road attribute information from map data.

The calculation device 330 may extract road object standard information matched with the road attribute information.

The calculation device 330 may generate style information on the basis of at least one of the road attribute information and the road object standard information. The calculation device 330 may determine style information for each of road elements by using the road object standard information about road attributes (i.e., the number of lanes, lane types, road element types, etc.) of each of the road elements included in the road attribute information.

The calculation device 330 may generate style information for selective rendering on the basis of a requested scale level. For example, the calculation device 330 may generate basic style information for generating a realistic road image for all the road elements. Alternatively, the calculation device 330 may also generate style information different from the basic style information for some road elements according to a scale level. Such a process is the same as described in FIGS. 6A, 6B, and 7.

The calculation device 330 may generate a road image by using the road geometry information and style information.

The calculation device 330 may generate a two-dimensional road image of a road on the basis of geometry information of a road in a specific area.

The calculation device 330 may generate images of road elements according to geometry information (i.e., positions and directions) of the road elements of a road in a corresponding area and style information of the corresponding road elements.

The calculation device 330 may generate the entire road image by arranging the images of the road elements on a two-dimensional road image.

The calculation device 330 may generate a overlaid road image. For example, the calculation device 330 may generate the overlaid road image by overlaying a basic road image on an aerial photograph. Alternatively, the calculation device 330 may generate a overlaid road image by overlaying an object image for an area except for roads and a basic road image.

The calculation device 330 may divide the generated basic road image and/or overlaid road image into a plurality of tiles. The calculation device 330 may control the plurality of divided tiles to be stored as respective individual files.

Furthermore, the calculation device 330 may also generate three-dimensional road data by texture mapping the basic road image or overlaid road image to a terrain of a given area having certain heights or curvatures.

The calculation device 330 may be a device such as a processor, an AP, or a chip having an embedded program, which are configured to process data and perform predetermined operations.

The output device 360 may output an interface screen required for the road image generation process. Additionally, the output device 360 may output a generated road image.

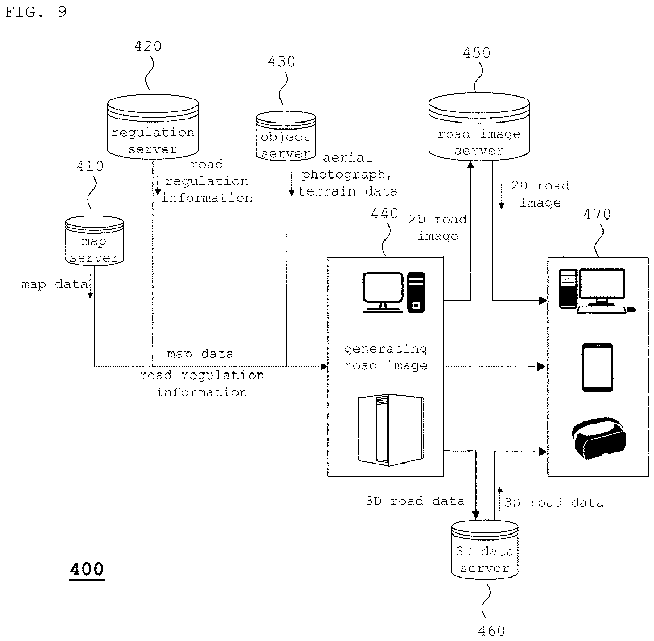

FIG. 9 is a view illustrating an example of a spatial information system 400 using road images. The spatial information system 400 may include a map server 410, a regulation server 420, an object server 430, an image processing apparatus 440, a road image server 450, a 3D data server 460, and a client terminal 470.

The map server 410 stores map data for a specific area where spatial information is provided. The specific area may refer to a certain administrative district (i.e., a city, province, county, etc.), a country, a plurality of countries, or the entire world.

The regulation server 420 stores road object standard information. The road object standard information is in accordance with road standards for relevant country or region.

The object server 430 may store aerial photographs of specific areas. The object server 430 may store terrain data having the three-dimensional heights or lows of specific area.

The image processing apparatus 440 may receive map data from the map server 410.

The image processing apparatus 440 may receive road regulation information from the regulation server 420.

From the object server 430, the image processing apparatus 440 may receive information such as aerial photographs, satellite photographs, and other objects, which are required for generating a overlaid road image.

The image processing apparatus 440 may extract road geometry information and road attribute information from map data.

The image processing apparatus 440 may extract road object standard information matched with the road attribute information.

The image processing apparatus 440 may generate style information on the basis of at least one of the road attribute information and the road object standard information.

The image processing apparatus 440 may generate style information for selective rendering on the basis of a requested scale level. For example, the image processing apparatus 440 may generate basic style information for generating a realistic road image for all road elements. Alternatively, the image processing apparatus 440 may generate style information different from the basic style information for some road elements according to a scale level. Such a process is the same as described in FIGS. 6A, 6B, and 7.

The image processing apparatus 440 may generate a road image by using road geometry information and style information.

The image processing apparatus 440 may generate a two-dimensional road image of a road on the basis of the geometry information of the road in a specific area.

The image processing apparatus 440 may generate images of road elements according to geometry information (i.e., positions and directions) of road elements of a road in a corresponding area and style information of the corresponding road elements.

The image processing apparatus 440 may generate the entire road image by arranging the images of the road elements on a two-dimensional road image.

The image processing apparatus 440 may generate a overlaid road image. The image processing apparatus 440 may generate the overlaid road image by overlaying a basic road image on an aerial photograph.

The image processing apparatus 440 may divide a generated basic road image and overlaid road image into a plurality of tiles.

Furthermore, the image processing apparatus 440 may generate three-dimensional road data by texture mapping a road image to a terrain of an area having certain heights or curvatures.

The image processing apparatus 440 may transmit a basic road image, a overlaid road image, or three-dimensional road data to the client terminal 470.

The image processing apparatus 440 may transmit the basic road image and/or overlaid road image to the road image server 450. The road image server 450 stores the basic road image and/or overlaid road image. The road image server 450 may store the basic road image or overlaid road image, which are divided into respective tile units.

The image processing apparatus 440 may transmit, to the 3D data server 460, three-dimensional road data generated by texture mapping the basic road image or overlaid road image to three-dimensional terrain data. The 3D data server 460 stores the three-dimensional road data. The 3D data server 460 may store the three-dimensional road data divided into tile units.

The client terminal 470 may be various display devices. For example, the client terminal 470 may be a device such as a PC, a smart device, or a head-mounted display device. The client terminal 470 may transmit a service location to the image processing apparatus 440 or the road server 450 and receive a road image or image tiles for the corresponding location. The client terminal 470 outputs the corresponding road image. Alternatively, the client terminal 470 may transmit a service location to the image processing apparatus 440 or the 3D data server 460, and may receive 3D road data or image tiles for the corresponding location. The client terminal 470 outputs the corresponding road image.

The above-described method for generating the road image may be implemented as a program (or an application) including an executable algorithm that is executable on a computer. The above-described program may be stored and provided in a transitory or non-transitory computer readable medium.

The non-transitory computer readable medium is not a medium such as a register, a cache, a memory, and the like for storing short-term data, but a medium for storing data semi-permanently and readable by a device. Specifically, the various applications or programs described above may be stored and provided in the non-transitory computer readable medium such as a CD, a DVD, a hard disk, a Blu-ray disk, a USB, a memory card, a read-only memory (ROM), a programmable read only memory (PROM), an Erasable PROM (EPROM) or an Electrically EPROM (EEPROM), or a flash memory.

The transitory computer readable medium refers to various random access memories (RAMs) such as a static RAM (SRAM), a dynamic RAM (DRAM), a synchronous DRAM (SDRAM), a double data rate SDRAM (DDR SDRAM), an enhanced SDRAM (ESDRAM), a Synclink DRAM (SLDRAM), and a direct Rambus RAM (DRRAM).

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A method for generating a road image by using map data, the method comprising:
receiving, by an image processing apparatus, an input of the map data of a specific area;
extracting, by the image processing apparatus, road geometry information and road attribute information of a road from the map data;
determining, by the image processing apparatus, road object standard information matched with the road attribute information for at least one or more road elements of the road;
generating, by the image processing device, style information for the at least one or more road elements on a basis of at least one of the road attribute information and the road object standard information; and
applying, by the image processing apparatus, the style information to the road geometry information to generate a basic road image comprising the road and the at least one or more road elements.

2. The method of claim 1, wherein the road geometry information comprises points, lines, or polygons, which are expressed as two-dimensional coordinates for the road and the at least one or more road elements.

3. The method of claim 1 or 2, wherein the road attribute information comprises at least one of road materials, the number of lanes on the road, lane types, crosswalk types, traffic light types, and road marking types.

4. The method of one of claims 1 to 3, wherein the road object standard information comprises shapes or colors according to regulations for the road attribute information of the at least one or more road elements.

5. The method of one of claims 1 to 4, wherein the image processing apparatus further receives a scale level and
generates the style information having at least one of the shapes and colors differently for the at least one or more road elements according to the scale level.

6. The method of one of claims 1 to 5, further comprising:
generating, by the image processing apparatus, a overlaid road image by overlaying the basic road image and an image for an area located in the specific area.

7. An image processing apparatus for generating a road image, the apparatus comprising:
an interface device for receiving an input of map data of a specific area; and
a calculation device for extracting road geometry information and road attribute information of a road from the map data;
determining road object standard information matched with the road attribute information for at least one or more road elements of the road;
generating style information for the at least one or more road elements on a basis of at least one of the road attribute information and the road object standard information; and
applying the style information to the road geometry information to generate a basic road image comprising the road and the at least one or more road elements.

8. The apparatus of claim 7, wherein the road geometry information comprises points, lines, or polygons, which are expressed as two-dimensional coordinates for the road and the at least one or more road elements.

9. The apparatus of claim 7 or 8, wherein the road attribute information comprises at least one of road materials, the number of lanes on the road, lane types, crosswalk types, traffic light types, and road marking types.

10. The apparatus of one of claims 7 to 9, wherein the road object standard information comprises shapes or colors according to regulations for the road attribute information of the at least one or more road elements.

11. The apparatus of one of claims 7 to 10, wherein the calculation device generates the style information having at least one of shapes and colors differently for the at least one or more road elements according to a requested scale level.

12. The apparatus of one of claims 7 to 11, wherein the calculation device generates a overlaid road image by overlaying the basic road image and an image for an area located in the specific area.

13. A system for generating a road image, the system comprising:
a map server for storing map data;
a regulation server for storing standard information on road elements according to road regulations; and
an image processing apparatus configured to perform:
(i) receiving the map data of a specific area from the map server;
(ii) extracting road geometry information and road attribute information of a road from the map data;
(iii) receiving, from a regulation database, road object standard information matched with the road attribute information for the at least one or more road elements of the road;
(iv) generating style information for the at least one or more road elements on a basis of at least one of the road attribute information and the road object standard information; and
(v) applying the style information to the road geometry information to generate a basic road image comprising the road and the at least one or more road elements.

14. The system of claim 13, wherein the image processing apparatus generates the style information having at least one of shapes and colors differently for the at least one or more road elements according to a requested scale level.

15. The system of claim 13 or 14, wherein the image processing apparatus generates a overlaid road image by overlaying the basic road image and an image for an area located in the specific area.
